# EUROPÄISCHE PATENTSCHRIFT

(11) **EP 0 907 539 B1**
(45) Veröffentlichungstag und Bekanntmachung des Hinweises auf die Patenterteilung: **21.01.2004**
(21) Anmeldenummer: 97929271.1
(22) Anmeldetag: 24.06.1997
(51) Int. Cl.: B60T 17/22, B60Q 1/44

(54) **HYDRAULISCHE BREMSANLAGE FÜR KRAFTFAHRZEUGE**
HYDRAULIC BRAKE SYSTEM FOR MOTOR VEHICLES
INSTALLATION DE FREINAGE HYDRAULIQUE POUR VEHICULES A MOTEUR

(30) Priorität: 01.07.1996 DE 19626306
(43) Veröffentlichungstag der Anmeldung: 14.04.1999
(73) Patentinhaber: Continental Teves AG & Co. oHG, 60488 Frankfurt (DE)
(72) Erfinder: SAALBACH, Kurt, D-64546 Mörfelden-Walldorf (DE); TANDLER, Peter, D-61479 Kronberg (DE)
(74) Vertreter: Portwich, Peter
(86) Internationale Anmeldenummer: PCT/EP1997/003294
(87) Internationale Veröffentlichungsnummer: WO 1998/000326

(56) Entgegenhaltungen:
- EP-A- 0 112 194
- DE-A- 2 437 112
- DE-A- 3 109 495
- DE-A- 3 713 662
- DE-A- 4 029 793
- DE-A- 4 430 168
- DE-U- 1 731 875
- US-A- 4 335 167

## Beschreibung

Die vorliegende Erfindung betrifft eine hydraulische Bremsanlage für Kraftfahrzeuge gemäß dem Oberbegriff von Anspruch 1 und ein Verfahren zur Auswertung des Bremsflüssigkeitsdruckes an verschiedenen Punkten einer solchen Anlage.

Eine derartige hydraulische Bremsanlage für Kraftfahrzeuge ist beispielsweise aus der DE 44 38 927 bekannt. Diese Druckschrift offenbart eine Bremsanlage, welche außer einer Bremsschlupfregelung auch eine Antriebsschlupfregelung oder eine anderweitige Fahrstabilitätsregelung vornehmen kann. Insbesondere für die Schlupfregelung werden die Flüssigkeitsdrücke an verschiedenen Stellen der Bremsleitungen über Druckaufnehmer gemessen und in einer Einrichtung ausgewertet, um beispielsweise eine Pumpe an- oder abzuschalten.

In hydraulischen Bremsanlagen wird heutzutage ein mechanischer Bremsdruckwarnschalter eingesetzt. Die DE 35 42 824 offenbart beispielsweise einen derartigen hydraulischen Differenzdruckwarnschalter, über den bestehende Druckdifferenzen in den beiden Bremskreisen hydraulisch sensiert und weitergeleitet werden. Diese mechanischen Schalter besitzen ein hohes Gewicht und können nur unter hohen Kosten gefertigt werden.

Aus der DE 33 47 819 ist ein Bremslichtschalter für Kraftfahrzeuge bekannt. Dabei werden die Bremslichter eines Kraftfahrzeuges über einen am Pedalbock angeordneten mechanischen Schalter betätigt. Ein derartiger Schalter ist relativ schwer, teuer und muß aufwendig mit dem Pedalbock verbunden werden.

Desweiteren ist aus der DE 40 29 793 A1 eine hydraulische Fahrzeugbremsanlage bekannt, bei der Drucksensoren zur warnung vor einem Druckabfall in der Anlage vorgesehen sind.

Der vorliegenden Erfindung liegt deshalb die Aufgabe zugrunde, eine hydraulische Bremsanlage der eingangs beschriebenen Art vorzuschlagen, bei der die mit dem Bremsflüssigkeitsdruck zusammenhängenden Warneinrichtungen kostengünstig ausgeführt sind und ein geringes Gewicht aufweisen.

Diese Aufgabe wird erfindungsgemäß in Verbindung mit den kennzeichnenden Merkmalen von Anspruch 1 gelöst. Dazu ist bei einer gattungsgemäßen hydraulischen Bremsanlage zumindest eine elektronische Druckwarneinrichtung vorgesehen, welche ferner als Bremslicht betätigungseinrichtung vorgesehen ist und für die in vorteilhafter Weise die ohnehin in einer derartigen Bremsanlage vorhandenen Drucksensoren genutzt werden. Mittels der Erfindung können die obigen, bisher mechanisch ausgebildeten Warneinrichtungen wegfallen.

In der bevorzugten Ausführungsform ist die Druckwarneinrichtung dabei als Anzeige für den Ausfall eines Bremskreises ausgeführt. Diese elektronische Kreisausfallanzeige übernimmt dabei die Aufgaben, die bisher von der hydraulischen Differenzdruckwarneinrichtung ausgeführt worden sind.

Wenn der Nachlaufbehälter in vorteilhafter Weise zumindest teilweise transparent ausgebildet ist, eine Füllstandsmarkierung aufweist und der Füllstand der Bremsflüssigkeit im eingebauten Zustand ohne Öffnen des Behälterverschlusses überprüfbar ist, kann bei der hydraulischen Bremsanlage erfindungsgemäß auf eine mit einem Schwimmer ausgeführte Behälterwarneinrichtung verzichtet werden. Über den Schwimmer wird dabei üblicherweise das Niveau der Bremsflüssigkeit aufgenommen und bei zu niedrigem Flüssigkeitsstand eine Warneinrichtung betätigt. Wenn die erfindungsgemäße Druckwarneinrichtung als Kreisausfallanzeige ausgeführt ist, entfällt eine derartige Warneinrichtung. Da der Kreisausfall, wie später beschrieben, nur bei betätigtem Bremspedal gemeldet wird, muß der Bremsflüssigkeitsbehälter einsehbar sein, damit ein Absinken des Bremsflüssigkeitsstandes optisch, zum Beispiel bei einer routinemäßigen Wartung des Kraftfahrzeuges, wahrgenommen werden kann.

In der bevorzugten Ausführungsform der vorliegenden Erfindung ist die Druckwarneinrichtung in einem Bordcomputer integriert, der ohnehin heutzutage in vielen Neuwagen vorhanden ist.

Erfindungsgemäß werden die von den Druck-sensoren ausgehende Signale in zumindest einer elektronischen Druckwarneinrichtung aufgenommen und verarbeitet.

Dabei werden die Signale der Druck-sensoren vorzugsweise getrennt ausgewertet, sie können aber auch zusammen aufgenommen und verarbeitet werden.

Eine Anzeige für den Ausfall eines Bremskreises erfolgt bei betätigter Pedaleinrichtung erfindungsgemäß, wenn das Ausgangssignal zumindest eines Druck-sensors einen vorgegebenen Sollwert unterschreitet. Derartige Sollwerte können beispielsweise in Abhängigkeit von der Pedalbetätigungskraft leicht über Versuche ermittelt werden.

Dabei erfolgt die Kreisausfallanzeige vorzugsweise, wenn die Differenz der Signale von wenigstens zwei in verschiedenen Kreisen angeordneten Druck-sensoren einen vorgegebenen Sollwert überschreitet.

Erfindungsgemäß können auch die Bremslichter des Kraftfahrzeuges eingeschaltet werden, wenn das Signal zumindest eines Drucksensors einen vorgegebenen Sollwert überschreitet. Dieser Sollwert kann analog zu oben, beispielsweise auch in Abhängigkeit vom Fahrzeugtyp, ermittelt werden.

Analog werden die Bremslichter des Kraftfahrzeuges ausgeschaltet, wenn die Signale der Druck-sensoren einen ebenfalls vorgegebenen und entsprechend tiefer liegenden Sollwert unterschreiten.

Die Auswertung der von den Druck-sensoren ausgehenden Signale wird dabei bevorzugt in einem Bordcomputer vorgenommen.

Eine nähere Erläuterung des Erfindungsgedankens erfolgt nun in Zusammenhang mit der einzigen
- Fig.,: die einen vereinfachten Schaltplan der hydraulischen Bremsanlage gemäß der vorliegenden Erfindung zeigt.

In diesem Schaltplan ist die erfindungsgemäße hydraulische Bremsanlage für Kraftfahrzeuge grob vereinfacht dargestellt. Der Plan zeigt einen Hauptzylinder 1, der an einem Nachlaufoder Vorratsbehälter 2 für Bremsflüssigkeit angeschlossen ist, welcher üblicherweise durch einen schraubbaren Deckel 2' verschlossen ist. Der Hauptzylinder 1 wird über eine Pedaleinrichtung 3 betätigt, wobei dies direkt oder indirekt über einen hier nicht dargestellten Bremskraftverstärker geschehen kann.

Die hydraulische Bremsanlage weist einen Primär- und einen Sekundärkreislauf (I, II) auf, wobei in der Fig. eine Diagonalaufteilung dargestellt ist, d.h. die Radbremsen 4 vorne rechts (VR) und hinten links (HL) sowie die Radbremsen 4 hinten rechts (HR) und vorne links (VL) sind jeweils miteinander über Bremsflüssigkeitsleitungen 5 verbunden. Bei der vorliegenden Erfindung kann es sich jedoch auch um um eine hydraulische Bremsanlage mit einer anderen Aufteilung handeln. Zur Vereinfachung des Schaltplanes sind nicht erfindungswesentliche hydraulische Bauteile 6, bei denen es sich beispielsweise um eine Pumpe, ein Ventil oder ähnliches handeln kann, nur als Black-Box dargestellt.

In der Bremsanlage sind als Druckspannungswandler ausgebildete Drucksensoren 7, 8 vorhanden, mit deren Hilfe die Bremsflüssigkeitsdrücke an verschiedenen Stellen der jeweiligen Bremskreise I, II aufgenommen und in ein elektronisches Signal umgewandelt werden. Diese Signale werden in der erfindungsgemäßen, vorzugsweise im Bordcomputer integrierten Druckwarneinrichtung 9 aufgenommen und dort verarbeitet. Wenn die Druckwarneinrichtung 9 im Bordcomputer ausgebildet ist, können dort auch andere elektronische Signale, beispielsweise von Radsensoren 10, ausgewertet werden.

Für die Nutzung der Druckwarneinrichtung 9 als Kreisausfallanzeige werden vorzugsweise die elektronischen Signale der Druckspannungswandler 7, die insbesondere in der Nähe des Hauptzylinders 1 angebracht sind, ausgewertet. Überschreitet die Druckdifferenz in den Bremskreisen I, II einen bestimmten Wert, so erfolgt elektronisch von der Druckwarneinrichtung 9 ein Signal, beispielsweise in Form einer Warnlampe, an den Fahrer des Kraftfahrzeuges.

Die Signale der Druckspannungswandler 7 können aber auch einzeln ausgewertet werden, so daß eine Fehlerwarnung an den Fahrer erfolgt, wenn ein einzelner Bremskreis I, II ausfällt und derjenige Sensor 7 ein Signal meldet, daß einen vorgegebenen, beispielsweise in Versuchen ermittelten Sollwert unterschreitet.

Da eine derartige Kreisausfallanzeige nur bei betätigtem Bremspedal 3 erfolgt, muß an dieser Stelle beispielsweise die Betätigungskraft durch den Fahrer gemessen werden, um eine genaue Anzeige des Kreisausfalls zu ermöglichen. Die Betätigungskraft des Pedals 3 wird dazu bevorzugt ebenfalls durch den Bordcomputer, bzw. die Druckwarneinrichtung 9 aufgenommen und verarbeitet.

In besonders vorteilhafter Weise kann durch die vorliegende Erfindung auf eine übliche Behälterwarneinrichtung, die über einen Schwimmer aktiviert wird, wenn das Bremsflüssigkeitsniveau im Behälter 2 einen Minimalwert unterschreitet, verzichtet werden. Die Kreisausfalleinrichtung 9 meldet jedoch nur den Kreisausfall eines Bremskreises I, II bei betätigten Bremspedal 3, also während der Fahrt. Wenn das Kraftfahrzeug jedoch längere Zeit stillsteht, kann es durch Undichtigkeiten im Bremssystem zu einer schleichenden Leckage kommen, die vom Fahrer nicht wahrgenommen wird. Aus diesem Grunde ist der Nachlaufbehälter 2 erfindungsgemäß in vorteilhafter Weise zumindest teilweise transparent, beispielsweise mit einem Schaufenster oder vollständig durchsichtig ausgebildet und weist eine Füllstandsmarkierung auf, die als Max.-Min.-Anzeige ausgeführt sein kann. Der Füllstand der Bremsflüssigkeit ist dadurch im eingebauten Zustand ohne Öffnen des Behälterverschlusses 2' leicht überprüfbar, so daß dieser beim Tanken oder einer anderen Inspektion von außen wahrgenommen werden kann.

In einer Weiterbildung der vorliegenden Erfindung können über die Druckwarneinrichtung 9 auch die Bremslichter eines Kraftfahrzeuges ein- bzw. ausgeschaltet werden. Das Einschalten erfolgt, wenn das Signal zumindest eines Druckspannungswandlers 7, 8 einen wiederum vorgegebenen Sollwert überschreitet. Wenn dieser Sollwert wieder unterschritten wird, schalten sich die Bremslichter automatisch wieder aus. Das Ausschalten der Bremslichter kann aber auch erfolgen, wenn ein anderer Sollwert unterschritten wird, der niedriger als dieser ist.

vorzugsweise werden die Bremslichter über in der Nähe der Radbremsen 4 angebrachte Druckspannungswandler 8 geschaltet, da hier das Signal einer tatsächlichen Bremsung am schnellsten vorliegt. Es ist aber auch möglich, die Bremslichter über die Sensoren 7 zu schalten, wenn eine schnelle Reaktion auf eine tatsächliche Betätigung des Bremspedals 3 durch den Fahrer erwünscht ist.

### Bezugszeichenliste

- 1: Hauptzylinder
- 2: Nachlaufbehälter
- 2': Behälterverschluß
- 3: Pedaleinrichtung
- 4: Radbremse
- 5: Bremsleitung
- 6: Hydraulikbauteil
- 7: Druckspannungswandler
- 8: Druckspannungswandler
- 9: Druckwarneinrichtung bzw. Bordcomputer
- I: Primärbremskreis
- II: Sekundärbremskreis

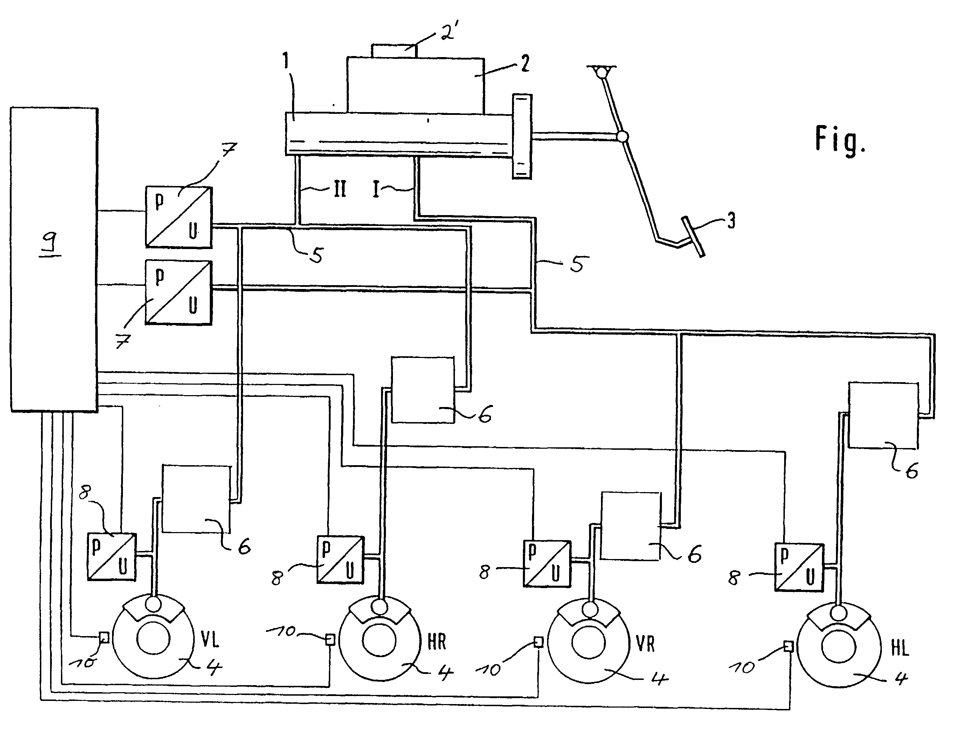

## Patentansprüche

1. Hydraulische Bremsanlage für Kraftfahrzeuge mit einem Hauptzylinder (1), der an einen Nachlaufbehälter (2) für Bremsflüssigkeit angeschlossen ist und über eine Pedaleinrichtung (3) betätigt wird, mit mindestens zwei Radbremsen (4), die über Bremsleitungen (5) und hydraulische Bauteile (6) mit dem Hauptzylinder (1) in Verbindung stehen und durch diesen über verschiedene Bremskreise (I, II) betätigt werden, und mit mindestens einem Drucksensor (7,8), **dadurch gekennzeichnet, dass** in der hydraulischen Bremsanlage zumindest eine elektronische Druckwarneinrichtung (9) vorgesehen ist und dass die Druckwarneinrichtung (9) ferner als Bremslichtbetätigungseinrichtung vorgesehen ist.

2. Hydraulische Bremsanlage nach Anspruch 1, **dadurch gekennzeichnet, dass** die Druckwarneinrichtung (9) als Anzeige für den Ausfall eines Bremskreises (I, II) ausgeführt ist.

3. Hydraulische Bremsanlage nach Anspruch 2, **dadurch gekennzeichnet, dass** der Nachlaufbehälter (2) zumindest teilweise transparent ausgebildet ist, eine Füllstandsmarkierung aufweist und der Füllstand der Bremsflüssigkeit im eingebauten Zustand ohne Öffnen eines Behälterverschlusses (2') überprüfbar ist.

4. Hydraulische Bremsanlage nach einem der vorhergehenden Ansprüche, **dadurch gekennzeichnet, dass** die Druckwarneinrichtung (9) in einem Bordcomputer (9) integriert ist.

5. Verfahren zur Auswertung von Bremsflüssigkeitsdrücken in einer hydraulischen Bremsanlage für Kraftfahrzeuge, die einen Hauptzylinder (1), der an einen Nachlaufbehälter (2) für Bremsflüssigkeit angeschlossen ist und über eine Pedaleinrichtung (3) betätigt wird, mindestens zwei Radbremsen (4), die über Bremsleitungen (5) und hydraulische Bauteile (6) mit dem Hauptzylinder (1) in Verbindung stehen und durch diesen über verschiedene Bremskreise (I, II) betätigt werden, und mindestens einen Drucksensor (7,8) aufweist, **dadurch gekennzeichnet, dass** von dem Drucksensor (7,8) ausgehende Signale in zumindest einer elektronischen Druckwarneinrichtung (9) ausgewertet werden und dass die Druckwarneinrichtung (9) ferner als Bremslichtbetätigungseinrichtung vorgesehen ist.

6. Verfahren nach Anspruch 5, **dadurch gekennzeichnet, dass** die Signale der Drucksensoren (7, 8) getrennt ausgewertet werden.

7. Verfahren nach Anspruch 6, **dadurch gekennzeichnet, dass** bei betätigter Pedaleinrichtung (3) eine Anzeige für den Ausfall eines Bremskreises (I, II) erfolgt, wenn das Signal zumindest eines Drucksensors (7, 8) einen vorgegebenen Sollwert unterschreitet.

8. Verfahren nach Anspruch 5 oder 6, **dadurch gekennzeichnet, dass** bei betätigter Pedaleinrichtung (3) eine Anzeige für den Kreisausfall erfolgt, wenn die Differenz der Signale von wenigstens zwei in verschiedenen Kreisen (I, II) angeordneten Drucksensoren (7, 8) einen vorgegebenen Sollwert überschreitet.

9. Verfahren nach Anspruch 5 oder 6, **dadurch gekennzeichnet, dass** die Bremslichter des Kraftfahrzeuges eingeschaltet werden, wenn das Signal zumindest eines Drucksensors (7, 8) einen vorgegebenen Sollwert überschreitet.

10. Verfahren nach Anspruch 5 oder 6, **dadurch gekennzeichnet, dass** die Bremslichter des Kraftfahrzeuges ausgeschaltet werden, wenn die Signale der Drucksensoren (7, 8) einen vorgegebenen Sollwert unterschreiten.

11. Verfahren nach einem der Ansprüche 5 bis 10, **dadurch gekennzeichnet, dass** die Auswertung der von den Drucksensoren (7, 8) ausgehenden Signale in einem Bordcomputer (9) erfolgt.

## Claims

1. Hydraulic brake system for motor vehicles comprising a master cylinder (1) connected to a supply reservoir (2) for brake fluid and actuated by a pedal device (3), at least two wheel brakes (4) connected by way of brake lines (5) and hydraulic components (6) to the master cylinder (1) and actuated by the latter by way of various brake circuits (I, II), and at least one pressure sensor (7, 8), **characterized in that** at least one electronic pressure warning device (9) is provided in the hydraulic brake system, and **in that** the pressure warning device (9) is further used as a brake light actuating device.

2. Hydraulic brake system as claimed in claim 1,
**characterized in that** the pressure warning device (9) is configured as an indicator of a failure of brake circuit (I, II).

3. Hydraulic brake system as claimed in claim 2,
**characterized in that** the supply reservoir (2) is at least partially transparent and has a full mark, and the filling state of the brake fluid can be checked in the built-in state without opening a reservoir cover (2').

4. Hydraulic brake system as claimed in any one of the preceding claims,
**characterized in that** the pressure warning device (9) is integrated into an onboard computer (9).

5. Process for evaluating brake fluid pressures in a hydraulic brake system for motor vehicles comprising a master cylinder (1) connected to a supply reservoir (2) for brake fluid and actuated by a pedal device (3), at least two wheel brakes (4) connected by way of brake lines (5) and hydraulic components (6) to the master cylinder (1) and actuated by the latter by way of various brake circuits (I, II), and at least one pressure sensor (7, 8), **characterized in that** signals coming from the pressure sensor (7, 8) are evaluated in at least one electronic pressure warning device (9), and that the pressure warning device (9) is further used as a brake light actuating device.

6. Process as claimed in claim 5,
**characterized in that** the signals of the pressure sensors (7, 8) are evaluated separately.

7. Process as claimed in claim 6,
**characterized in that** when the pedal device (3) is operated, a failure of a brake circuit (I, II) is indicated when the signal of at least one pressure sensor (7, 8) falls below a preset nominal value.

8. Process as claimed in claim 5 or 6,
**characterized in that** when the pedal device (3) is operated, circuit failure is indicated when the difference of the signals of at least two pressure sensors (7, 8) arranged in various circuits (I, II) exceeds a preset nominal value.

9. Process as claimed in claim 5 or 6,
**characterized in that** the brake lights of the motor vehicle are switched on when the signal of at least one pressure sensor (7, 8) exceeds a preset nominal value.

10. Process as claimed in claim 5 or 6,
**characterized in that** the brake lights of the motor vehicle are switched off when the signals of the pressure sensors (7, 8) fall below a preset nominal value.

11. Process as claimed in any one of claims 5 to 10,
**characterized in that** the signals coming from the pressure sensors (7, 8) are evaluated in an onboard computer (9).

## Revendications

1. Dispositif de freinage hydraulique, pour véhicule automobile, comprenant un maître-cylindre (1), qui est raccordé à un réservoir d'équilibre (2) pour un liquide de frein et est actionné au moyen d'un dispositif de pédale (3), au moins deux freins de roue (4), qui, par l'intermédiaire de tuyauteries de frein (5) et d'éléments constitutifs hydrauliques (6), sont en communication avec le maître-cylindre (1) et sont actionnés au moyen de celui-ci par l'intermédiaire de différents circuits de frein (I, II), et au moins un capteur de pression (7, 8), **caractérisé en ce que**, dans le dispositif de freinage hydraulique, il est prévu au moins un dispositif électronique de signalisation de pression (9) et **en ce que** le dispositif de signalisation de pression (9) est en outre prévu sous forme d'un dispositif d'actionnement de feux-stop.

2. Dispositif de freinage hydraulique suivant la revendication 1, **caractérisé en ce que** le dispositif de signalisation de pression (9) est réalisé sous forme d'un élément d' indication correspondant à la défaillance d'un circuit de frein (I, II).

3. Dispositif de freinage hydraulique suivant la revendication 2, **caractérisé en ce que** le réservoir d'équilibre (2) est réalisé au moins en partie d'une manière transparente et comporte un marquage de niveau et le niveau du liquide de frein à l'état monté peut être contrôlé sans ouvrir un organe de fermeture de réservoir (2').

4. Dispositif de freinage hydraulique suivant l'une des revendications précédentes, **caractérisé en ce que** le dispositif de signalisation de pression (9) est intégré dans un ordinateur de bord (9).

5. Procédé d'analyse de pressions de liquide de frein dans un dispositif de freinage hydraulique, pour véhicule automobile, qui comprend un maître-cylindre (1), qui est raccordé à un réservoir d'équilibre (2) pour un liquide de frein et est actionné au moyen d'un dispositif de pédale (3), au moins deux freins de roue (4), qui, par l'intermédiaire de tuyauteries de frein (5) et d'éléments constitutifs hydrauliques (6), sont en communication avec le maître-cylindre (1) et sont actionnés au moyen de celui-ci par l'intermédiaire de différents circuits de frein (I, II), et au moins un capteur de pression (7, 8), **caractérisé en ce que** des signaux provenant du capteur de pression (7, 8) sont analysés dans au moins un dispositif électronique de signalisation de pression (9) et **en ce que** le dispositif de signalisation de pression (9) est en outre prévu sous forme d'un dispositif d'actionnement de feux-stop.

6. Procédé suivant la revendication 5, **caractérisé en ce que** les signaux des capteurs de pression (7, 8) sont analysés séparément.

7. Procédé suivant la revendication 6, **caractérisé en ce que**, lorsque le dispositif de pédale (3) est actionné, une indication correspondant à la défaillance d'un circuit de frein (I, II) a lieu lorsque le signal d'au moins un capteur de pression (7, 8) franchit vers le bas une valeur de consigne préfixée.

8. Procédé suivant la revendication 5 ou 6, **caractérisé en ce que**, lorsque le dispositif de pédale (3) est actionné, une indication correspondant à la défaillances de circuit a lieu lorsque la différence des signaux d'au moins deux capteurs de pression (7, 8) disposés dans des circuits (I, II) différents franchit vers le haut une valeur de consigne préfixée.

9. Procédé suivant la revendication 5 ou 6, **caractérisé en ce que** les feux-stop du véhicule automobile sont mis en circuit lorsque le signal d'au moins un capteur de pression (7, 8) franchit vers le haut une valeur de consigne préfixée.

10. Procédé suivant la revendication 5 ou 6, **caractérisé en ce que** les feux-stop du véhicule automobile sont mis hors circuit lorsque les signaux des capteurs de pression (7, 8) franchissent vers le bas une valeur de consigne préfixée.

11. Procédé suivant l'une des revendications 5 à 10, **caractérisé en ce que** l'analyse des signaux provenant des capteurs de pression (7, 8) a lieu dans un ordinateur de bord (9).
